# EUROPÄISCHE PATENTSCHRIFT

(11) **EP 2 099 968 B1**
(45) Veröffentlichungstag und Bekanntmachung des Hinweises auf die Patenterteilung: **10.09.2014**
(21) Anmeldenummer: 07846768.5
(22) Anmeldetag: 23.11.2007
(51) Int. Cl.: D21C 9/18

(54) **VERFAHREN ZUR BEHANDLUNG VON BEIM EINDICKEN VON PAPIERFASERSUSPENSION ANFALLENDEM FILTRAT**
METHOD OF TREATING FILTRATE PRODUCED IN THICKENING OF PAPER FIBRE SUSPENSION
PROCÉDÉ POUR TRAITER LE FILTRAT PRODUIT LORS DE L'ÉPAISSISSEMENT D'UNE SUSPENSION DE FIBRES DE PAPIER

(30) Priorität: 08.12.2006 DE 102006057861
(43) Veröffentlichungstag der Anmeldung: 16.09.2009
(73) Patentinhaber: Voith Patent GmbH, 89522 Heidenheim (DE)
(72) Erfinder: ALBRECHT, Falk, 88410 Bad Wurzach (DE); BRITZ, Herbert, 88250 Weingarten (DE); SCHUBERT, Hans-Ludwig, 88255 Baienfurt (DE); UNGER, Fred, 88250 Weingarten (DE)
(86) Internationale Anmeldenummer: PCT/EP2007/010167
(87) Internationale Veröffentlichungsnummer: WO 2008/067916

(56) Entgegenhaltungen:
- WO-A-02/14600
- WO-A-98/15686
- WO-A-2005/024125
- DE-A1- 2 803 804
- US-A- 4 298 427
- US-A- 4 806 203
- US-A1- 2003 188 838
- US-A1- 2005 061 459

## Beschreibung

Die Erfindung bezieht sich auf ein Verfahren gemäß dem Oberbegriff des Anspruchs 1, wie es beispielsweise aus der US-A-4 806 203 oder der US 2005/061459 A1 bekannt ist.

Bekanntlich enthalten Papierfasersuspensionen nicht nur die eigentlichen Papierfasern, sondern auch eine mehr oder weniger große Menge von feinen Feststoffen. Solche feinen Feststoffe können mineralische Füllstoffe sein, die in der Regel zur Papiererzeugung nötig sind. Man nennt sie zumeist "Asche", da die mineralischen Füllstoffe unbrennbar sind. Es können aber auch Faserbruchstücke sein, die z.B. bei der Mahlung der Fasern entstehen. Diese werden auch Feinstoffe genannt.

Wenn aus prozesstechnischen Gründen die Konsistenz der Papierfasersuspension erhöht werden soll, wird eingedickt. Dabei gehen nicht nur ein Teil des Wassers, sondern auch ein Teil der feinen Feststoffe in das Filtrat über, weshalb also in der Regel sich das Filtrat aus Wasser, Fein- und Füllstoffen zusammensetzt. Bei der üblichen Prozessführung wird dieses Filtrat dazu verwendet, um an einer stromaufwärts gelegenen Stelle die Faserstoffsuspension zu verdünnen. Auf diese Weise gehen die feinen Feststoffe nicht verloren. Bei der beschriebenen Vorgehensweise ist es jedoch möglich, dass die Anreicherung von Fein- und Füllstoffen in den Filtraten relativ groß wird. Es ist daher möglich, dass diese an sich günstige Methode der Filtratrückführung zu Störungen im Prozessablauf führt. Eine mögliche Abhilfe, um solche Störungen zu vermeiden, liegt zwar darin, die Fein- und Füllstoffe aus dem Kreislauf zu entfernen; dann steigen aber die Stoffverluste an. So zeigt die DE 28 13 448 A1 ein Verfahren, bei dem die feinen Feststoffe aus dem Filtrat in einem Nebenkreislauf entfernt werden und das so gewonnene geklärte Rückwasser stromabwärts zur Verdünnung wieder eingesetzt wird.

Wird für die Eindickung des Filtrats ein Filter, z.B. wie üblich ein Scheibenfilter, verwendet, muss dieser wegen des höheren Aschegehalts entsprechend groß dimensioniert werden.

Es ist aber auch möglich, dass, um den gewünschten Weißgrad zu erreichen, eine vorhandene Flotationsanlage so eingestellt wird, dass sie den Stoff wesentlich stärker entascht als es für das aus der Faser später hergestellte Papier an sich erforderlich ist.

Der Erfindung liegt die Aufgabe zu Grunde, Verfahren dieser Art so zu verbessern, dass sich der Aufbereitungsprozess sicher und mit geringen Stoffverlusten durchführen lässt. Insbesondere sollen sich auch für hochwertige Sorten, wie z.B. grafische Papiere, bestimmte Rohstoffe mit hoher Ausbeute aufbereiten lassen.

Diese Aufgabe wird durch die im Kennzeichen des Anspruchs 1 genannten Merkmale in Verbindung mit denen des Oberbegriffs gelöst.

Das erfindungsgemäße Verfahren bietet die Möglichkeit, die bei den Eindickungsschritten anfallenden Filtrate so zu führen, bzw. zu behandeln, dass die darin unvermeidbarer Weise enthaltenen feinen Feststoffe optimal genutzt werden können. So gibt es Filtrate, bei denen solche Feststoffe sehr wertvoll für die Papiererzeugung sind, z.B. wenn es sich dabei um weiße mineralische Füllstoffe handelt und wenn die Verschmutzung des Filtrates durch restliche Störstoffe minimal ist. Solche Filtrate fallen oft am Ende der Stoffaufbereitung an. Außerdem wird durch das neue Verfahren eine allzu starke Anreicherung dieser Stoffe in den Wasserkreisläufen verhindert.

Besondere Vorteile ergeben sich dann, wenn der Rohstoff und damit die Faserstoffsuspension besonders viel Asche enthält, was z.B. bei vielen Altpapiersorten der Fall ist. Dabei sind rohstoffseitig bereits Aschegehalte von 20 % oder darüber keine Seltenheit. In vielen Fällen wird die Eindickung, die, wie bereits beschrieben wurde, aus prozesstechnischen Gründen erforderlich sein kann, mit besonders ökonomisch arbeitenden Schneckenpressen durchgeführt. Solche Schneckenpressen haben sich zwar bewährt, im Gegensatz zu Filtern oder Siebbandpressen ist bei ihnen der Siebdurchfall jedoch deutlich größer, was eben gerade bei aschereichen Faserstoffsuspensionen zu einem relativ großen Aschegehalt auch in den gebildeten Filtraten führt. Da es nun gelingt, die feststoffreichen Filtrate so zu leiten, dass ihre Zugabe zum Faserstoff unproblematisch ist, können die Verluste gering gehalten werden, ohne dass im Aufbereitungsprozess Nachteile entstehen.

Die Erfindung und ihre Vorteile werden erläutert an Hand von Zeichnungen, von denen zeigen:
- Fig. 1: ein Verfahrensschema zur Durchführung des erfindungsgemäßen Verfahrens;
- Fig. 2: eine Variante des Verfahrens mit besonders vorteilhaften Bleichschritten;
- Fig. 3: eine Variante des Verfahrens mit ausgeprägter Vorwärtsführung der in den Filtraten enthaltenen Feststoffe;
- Fig. 4: eine weitere Variante des Verfahrens mit doppelter Filtratfraktionierung;
- Fig. 5: eine weitere Variante des Verfahrens ohne Filtratfraktionierung.

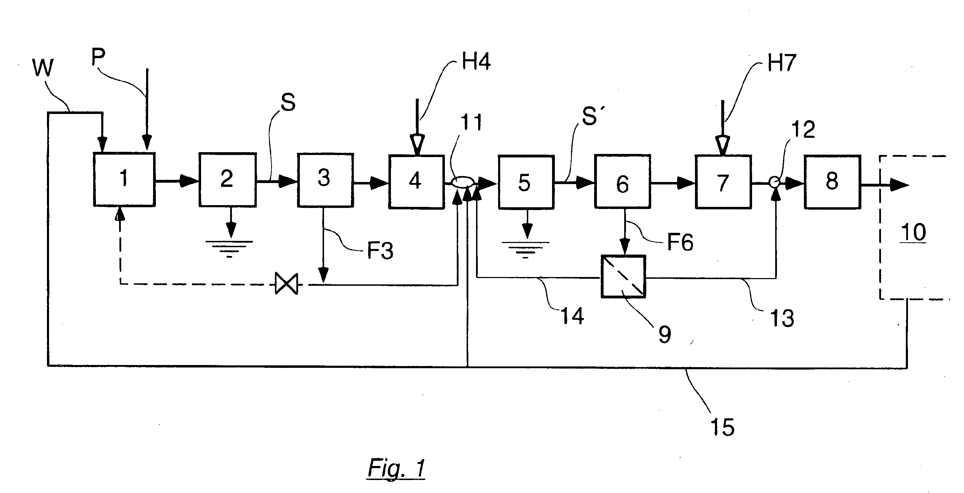

In Fig. 1 ist ein Verfahrensschema dargestellt, welches in einer exemplarischen Kombination die wesentlichen Prozessschritte bei der Durchführung des erfindungsgemäßen Verfahrens zeigt. Wie an sich bekannt, wird eine Faserstoffsuspension dadurch hergestellt, dass das Papiermaterial P z.B. in Form von Altpapier mit Wasser W in einer Auflösung 1 mechanisch und eventuell chemisch so bearbeitet wird, dass eine pumpfähige Faserstoffsuspension entsteht. Die sich anschließende erste Reinigung 2 kann z.B. mit Drucksortierern und Hydrozyklonen versehen sein, um die groben Verunreinigungen möglichst früh auszuscheiden. Typisch für das hier vorgeschlagene Verfahren ist, dass die erste Reinigung 2 auch mit einer Flotationsanlage ausgestattet ist. Die gereinigte Faserstoffsuspension S gelangt als nächstes in die Eindickung 3. Dabei wird ein Filtrat F3 gebildet, das neben einem großen Teil des Wassers auch die bereits erwähnten feinen Feststoffe, insbesondere Füllstoffe und Feinstoffe, enthält. Dieses Filtrat F3 wird vollständig oder zumindest teilweise an einer Stelle 11 in den Faserstoffsuspensionsstrom zurückgeführt, welche stromabwärts zur Eindickung 3 liegt. Eventuell kann ein Teil des Filtrats F3 auch in die Auflösung 1 zurückgeführt werden. Diese Option ist nur gestrichelt eingezeichnet und als Sonderfall anzusehen, z.B. um den Prozess zu regeln. Die Eindickung 3 kann z.B. mit einer Schneckenpresse erfolgen, in der das Filtrat F3 durch einen Siebmantel hindurch gepresst wird. Es kann zusätzlich ein Scheibenfilter vorhanden, insbesondere der Schneckenpresse vorgeschaltet sein.

Nach der Eindickung 3 hat der Faserstoff eine wesentlich höhere Konsistenz (z.B. 15 bis 30 %) und gelangt in die Stoffbearbeitung 4, in der ein oder mehrere Prozessschritte durchgeführt werden, die diese höhere Konsistenz erfordern. Das kann z.B. eine Dispergierung mit oder ohne Bleiche sein, wozu die Hilfsmittel H4 in Form von Energie und Chemikalien zugeführt werden. Danach wird durch Zugabe des Filtrats F3 an der Stelle 11 und eventuell weiterer Verdünnungsflüssigkeiten die Konsistenz des Faserstoffes wieder abgesenkt (z.B. auf 1 bis 2 %), so dass eine nachfolgende zweite Reinigung 5 optimal durchgeführt werden kann. Auch hier ist wieder der Einsatz von Drucksortierern, Hydrozyklonen und/oder besonders einer weiteren Flotationsanlage möglich.

In der nachfolgenden Eindickung 6 der Faserstoffsuspension S' erfolgt wiederum eine Anhebung der Konsistenz unter Bildung eines Filtrats F6. Dieses Filtrat wird hier anders behandelt, als bereits beim Filtrat F3 beschrieben, und zwar wird die Möglichkeit genutzt, durch eine Fraktionierung 9 des Filtrats F6 ein Klarfiltrat 14 sowie ein Stoffkonzentrat 13 zu bilden. Letzteres kann an einer Stelle 12 dem Stoffstrom wieder zugegeben werden, der stromabwärts bezüglich der Eindickung 6 liegt. Dadurch wird eine besonders vorteilhafte Filtratbehandlung möglich, da das Wasser zurück und der Feststoff vorwärts geführt werden. Eine solche Filtratfraktionierung 9 ist besonders dann von Vorteil, wenn sich im Klarfiltrat 14 gelöste produktionsstörende Stoffe befinden, da diese dann nicht vorwärts geführt werden. Die hier beschriebene Filtratfraktionierung 9 kann z.B. mit Vorteil in Hydrozyklonen oder Zentrifugen durchgeführt werden, da insbesondere die mineralischen Füllstoffe schwerer sind als Wasser, sich also durch Zentrifugalkräfte vom Klarfiltrat trennen lassen. Die bei der Filtratfraktionierung gewünschte Aufteilung in Klarfiltrat und Stoffkonzentrat kann aber mit Hilfe der an einer anderen Stelle bereits erwähnten Siebpresse durchgeführt werden. Auch durch Flotationseinrichtungen ist eine solche Filtratfraktionierung möglich, wobei die Flotationseinrichtung entweder als Entspannungsflotation (DAF) zur Vollentstoffung oder als selektive Flotation, wie sie für den Deinkingprozess eingesetzt wird, ausgeführt sein kann.

Es kann aus prozesstechnischen Gründen besser sein, die in der Stoffvorlage 8 für die Papier- oder Kartonmaschine 10 bereitgestellte Faserstoffsuspension auch mit dem von der Papier- oder Kartonmaschine 10 kommenden Siebwasser zu verdünnen. Die Papier- oder Kartonmaschine 10 ist hier nur angedeutet. Ein Teil des dort anfallenden Siebwassers kann als Verdünnungswasser 15 in der Stoffaufbereitung genutzt werden, z.B. um zumindest teilweise das Wasser W für die Auflösung 1 bereit zu stellen oder auch um eine zusätzliche Verdünnung in der Nähe der Stelle 11 vorzunehmen. Um zu verhindern, dass mit Hilfe dieses Verdünnungswassers 15 ein Teil der Aschefracht aus der Papiermaschine in die Stoffaufbereitung zurückgelangt, kann man ein späteres Siebwasser mit geringerem Ascheanteil, also z.B. Siebwasser II, dazu verwenden.

Der in Folge der Eindickung 6 eine relativ hohe Konsistenz (z.B. 15 bis 30 %) aufweisende Faserstoff wird der Stoffbearbeitung 7 zugeführt, in der unter Anwendung der Hilfsmittel H7 (z.B. Energie und Chemikalien) erneut dispergiert und gebleicht wird. Es kann hier aber auch statt der Dispergierung eine Mahlung vorgenommen werden.

Das in Fig. 1 gezeigte Verfahren ist nur ein mögliches Ausführungsbeispiel. Insbesondere sind Überlegungen anzustellen, an welchen Eindickprozessen der Stoffaufbereitung das Verfahren besonders sinnvoll durchgeführt werden kann. Es muss auch nicht notwendiger Weise, wie in Fig. 1 dargestellt, an beiden durchgeführten Eindickungen 3 und 6 angewendet werden.

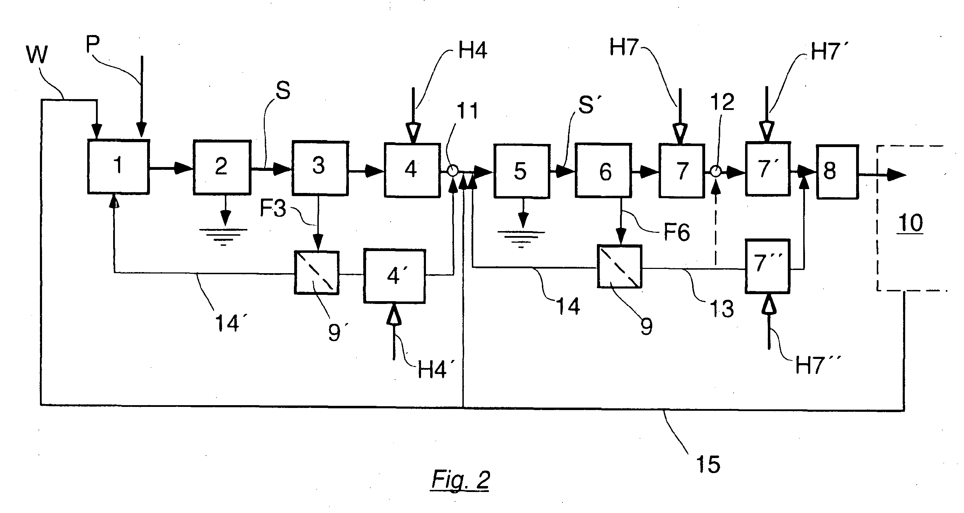

Fig. 2 enthält eine Variante des in Fig. 1 gezeigten Verfahrens. Dabei wird der stromabwärts wieder zugegebene Teil des Filtrates F3 bzw. F6 gebleicht. Vorzugsweise wird diese Bleiche 4' bzw. 7' bzw. 7" reduzierend durchgeführt, d.h. in den Hilfsmitteln H4' bzw. H7' bzw. H7" sind reduzierende Bleichchemikalien enthalten. An welchen Stellen und wie oft gebleicht wird, kann je nach Bedingungen und Anforderungen bestimmt werden. In den üblichen Fällen, bei denen der Hauptstrom in der Bleiche 7' reduzierend gebleicht wird, kann das Feststoffkonzentrat 13 auch ungebleicht vor diese Bleiche 7' eingeleitet werden. Besonders günstig ist die Kombination einer oxidierenden Bleiche des Hauptstromes in der Stoffbearbeitung 4 mit einer reduzierenden Bleiche 4' des Filtrates F3 nach Eindickung in der Filtratfraktionierung 9', wobei der reduzierend gebleichte Stoff stromabwärts der oxidierenden Bleiche (Stoffbearbeitung 4) wieder zugegeben wird.

Die Bleiche 7" des Feststoffkonzentrats 13 ist nur eine der Möglichkeiten, auf die Qualität Einfluss zu nehmen. Da hier eine faserarme oder faserfreie Fraktion mit definierten Stoffen vorliegt, kann eine chemische Behandlung durchgeführt werden, die auf die Eigenschaften dieser Stoffe gezielt ausgerichtet ist. Wenn hier z.B. eine störende Menge von Kleberpartikeln (Stickies) vorhanden ist, können diese speziell chemisch so verändert werden, dass sie nicht mehr stören.

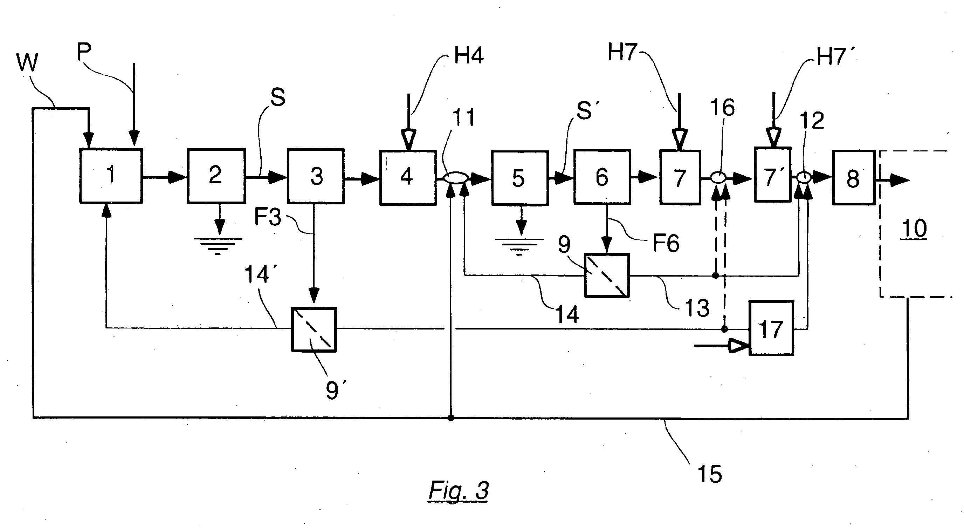

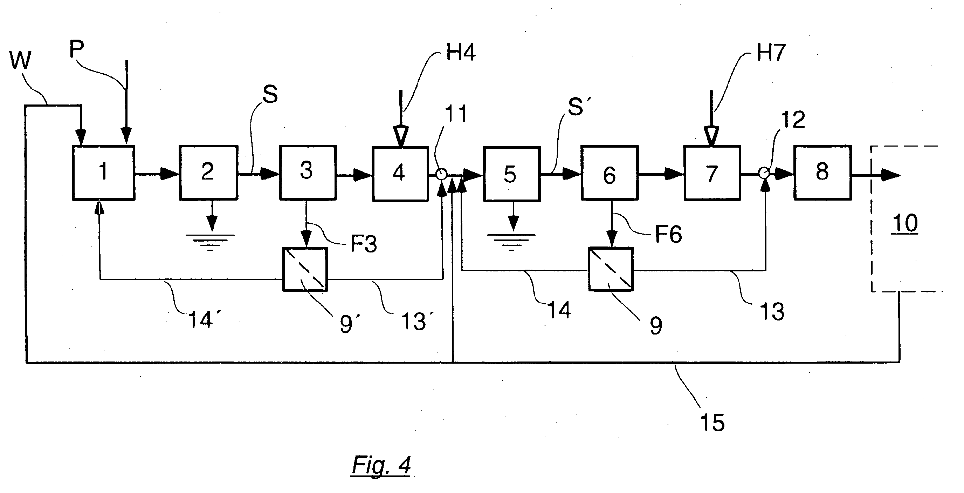

Die Fig. 3 zeigt eine andere Realisierung der Erfindung. Darin wird das aus der ersten Eindickung 3 stammende Filtrat F3 über eine Filtratfraktionierung 9' wiederum in ein Klarfiltrat 14' und ein Stoffkonzentrat 13' aufgeteilt. Es kann von Vorteil sein, das Stoffkonzentrat 13' einer reduzierenden Bleiche 17 zu unterziehen und den Faserstoff erst nach der Bleiche 7' an der Stelle 12 wieder zuzugeben. Das Klarfiltrat 14' kann in die Auflösung 1 zurückgehen, während das Stoffkonzentrat 13' an einer Stelle 12 oder Stelle 16 in den Stoffstrom zurückgelangt, die relativ weit stromabwärts der Eindickung 3 ist (langer Loop). Das Filtrat F6 der dazwischen liegenden Eindickung 6 wird durch die Filtratfraktionierung 9 geteilt; das dabei gebildete Klarfiltrat 14 gelangt zur Verdünnung vor die Reinigungsstufe 5 und das Stoffkonzentrat 13 ebenfalls in die Stelle 12 oder Stelle 16. Auf diese Weise werden also die feinen Feststoffe, die sich im Filtrat F3 befinden, relativ frühzeitig dem Prozess entnommen und relativ spät wieder zugegeben. Unter Berücksichtigung von Aufwand und Wirkung handelt es sich hier also um eine besonders vorteilhafte Ausführungsform des Verfahrens. Als Variante hierzu können auch nach der Filtratfraktionierung 9 bzw. 9' zwei kurze Loops für das jeweilige Stoffkonzentrat 13 bzw. 13' gebildet werden (Fig. 4).

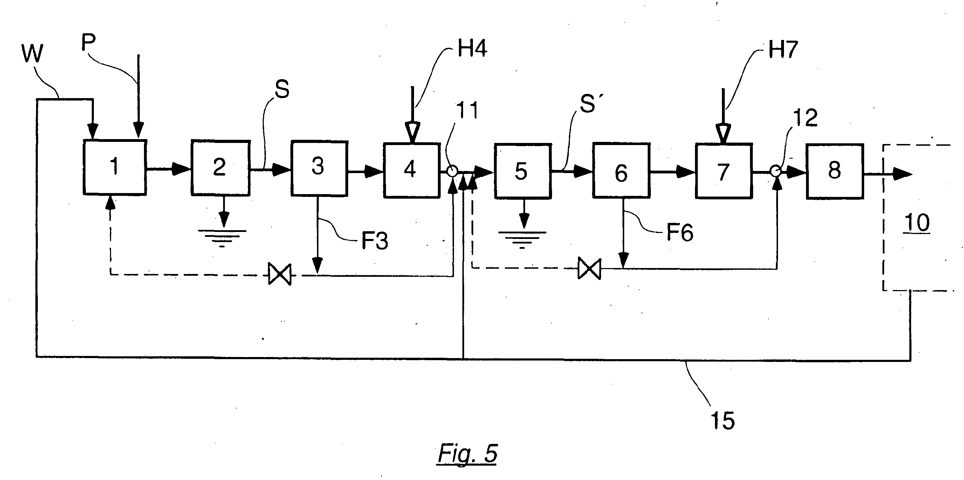

Am wenigsten Aufwand verursacht eine Verfahrensführung gemäß Fig. 5, bei der beide Filtrate F3 und F4 ohne Fraktionierung aufgeteilt und ein Teil davon jeweils vorwärts in die Stellen 11 und 12 und ein anderer Teil jeweils zurückgeführt werden.

Besondere Vorteile bietet das erfindungsgemäße Verfahren auch dadurch, dass sich die Möglichkeiten zur Regelung des Aufbereitungsprozesses erweitern lassen. Es kann nämlich sowohl die Menge des abgeführten Filtrates, als auch dessen Aufteilung (vorwärts oder rückwärts) variabel gestaltet werden, wozu das Prozessleitsystem eingesetzt werden kann. So ist es z.B. möglich, mit Hilfe eines solchen Regelkreises den Weißgrad der Faserstoffsuspension auf einem gewünschten Sollwert zu halten, indem die beschriebenen Regeleingriffe durchgeführt werden. Dabei kann es z.B. eine Rolle spielen, ob die feinen Feststoffe im stromabwärts wieder zugeführten Filtrat einen höheren oder niedrigeren Weißgrad haben als die dort vorgefundene Fasersuspension. Mit anderen Worten: Es kann ein Kompromiss zwischen optimaler Ausbeute des Verfahrens und gefordertem Weißgrad gefunden werden. Ähnliche Überlegungen können auch bezüglich des Aschegehaltes der zur Papiermaschine geleiteten Faserstoffsuspension angestellt werden. Es ist leicht einzusehen, dass auch weitere Eigenschaften der Suspension auf diese Weise geregelt werden können, sofern diese durch die Führung des Filtrates oder der Filtrate geändert werden können.

Eine typische Anwendung des Verfahrens ist die Aufbereitung von Altpapier zur Erzeugung graphischer Papiere. Es kann aber auch bei der Aufbereitung für Verpackungspapiere angewendet werden, besonders wenn dort Filtrate mit störendem Anteil feiner Feststoffe anfallen, die die Wasserkreisläufe belasten.

## Patentansprüche

1. Verfahren zur Behandlung von bei mindestens einer Eindickung (3, 6) einer Papierfasersuspension (S, S'), insbesondere einer aus Altpapier gewonnenen Papierfasersuspension (S, S') anfallendem Filtrat (F3, F6), wobei zumindest ein Teil des Filtrats (F3, F6) zu der Papierfasersuspension an einer Stelle (11,12, 16) wieder zugegeben wird, die stromabwärts der Eindickung (3, 6) liegt, aus der das Filtrat (F3, F6) stammt und der Eindickung (3,6) eine Stoffbearbeitung (4,7) des dabei eingedickten Stoffes folgt,
**dadurch gekennzeichnet,**
**dass** die Zugabe des Filtrats (F3, F6) nach der folgenden Stoffbearbeitung (4,7) erfolgt, der Aschegehalt der Papierfasersuspension vor oder nach der Eindickung (3, 6) gemessen wird und dass der Messwert für die Steuerung oder Regelung der Eindickung (3, 6) verwendet wird und dass unter Verwendung dieses Messwerts der Aschegehalt der zur Papier- oder Kartonmaschine (10) geführten Papierfasersuspension auf einen Sollwert geregelt wird, indem mit Hilfe mindestens eines Regler die Filtratmenge oder die Rückführung der Filtratströme verändert wird.

2. Verfahren nach Anspruch 1,
**dadurch gekennzeichnet,**
**dass** die Zugabe des Filtrats nach der folgenden Stoffbearbeitung (4,7) erfolgt, der Weißgrad der Papierfasersuspension gemessen und auf einen Sollwert geregelt wird, indem mit Hilfe mindestens eines Reglers die Filtratmenge oder die Rückführung der Filtratströme verändert wird.

3. Verfahren nach Anspruch 1 oder 2,
**dadurch gekennzeichnet,**
**dass** der stromabwärts wieder zugegebene Teil des Filtrates (F3, F6) einen Gehalt an mineralischen Stoffen aufweist, der zwischen 0,5 und 20 % liegt.

4. Verfahren nach einem der voran stehenden Ansprüche,
**dadurch gekennzeichnet,**
**dass** das Filtrat (F3, F6) vor der Wiederzugabe fraktioniert wird, so dass ein Stoffkonzentrat (13, 13') und ein Klarfiltrat (14, 14') entstehen und dass das Stoffkonzentrat (13, 13') an einer stromabwärts der Eindickung (3, 6), aus der das Filtrat (F3, F6) stammt, gelegenen Stelle (11, 12, 16) wieder zugegeben wird.

5. Verfahren nach Anspruch 4,
**dadurch gekennzeichnet,**
**dass** das Klarfiltrat (14, 14') an einer stromaufwärts der Eindickung (3, 6), aus der das Filtrat (F3, F6) stammt, gelegenen Stelle wieder zugegeben wird.

6. Verfahren nach Anspruch 4 oder 5,
**dadurch gekennzeichnet,**
**dass** die Filtratfraktionierung (9, 9') in Hydrozyklonen durchgeführt wird, bei denen das Stoffkonzentrat (13, 13') am Schwerstoffausgang abgenommen wird.

7. Verfahren nach Anspruch 4 oder 5,
**dadurch gekennzeichnet,**
**dass** die Filtratfraktionierung (9, 9') in einem Scheibenfilter durchgeführt wird.

8. Verfahren nach Anspruch 4 oder 5,
**dadurch gekennzeichnet,**
**dass** die Filtratfraktionierung (9, 9') in einer Zentrifuge durchgeführt wird.

9. Verfahren nach Anspruch 4 oder 5,
**dadurch gekennzeichnet,**
**dass** die Filtratfraktionierung (9, 9') in einer Entspannungsflotation durchgeführt wird.

10. Verfahren nach Anspruch 4 oder 5,
**dadurch gekennzeichnet,**
**dass** die Filtratfraktionierung (9, 9') in einer selektiven Flotation durchgeführt wird.

11. Verfahren nach einem der Ansprüche 4 bis 10,
**dadurch gekennzeichnet,**
**dass** mindestens ein Stoffkonzentrat (13, 13') vor der Wiederzugabe chemisch behandelt, insbesondere gebleicht wird.

12. Verfahren nach Anspruch 11,
**dadurch gekennzeichnet,**
**dass** die Bleiche (4', 7") reduzierend durchgeführt wird.

13. Verfahren nach einem der voran stehenden Ansprüche,
**dadurch gekennzeichnet,**
**dass** die Papierfasersuspension vor der zumindest einen Eindickung (3, 6) einer Reinigung (2, 5) unterzogen wird.

14. Verfahren nach Anspruch 13,
**dadurch gekennzeichnet,**
**dass** zumindest eine Reinigung (2, 5) eine Flotation umfasst.

15. Verfahren nach Anspruch 14,
**dadurch gekennzeichnet,**
**dass** die Papierfasersuspension vor der Zuführung in die Eindickung (6) zwei Mal durch Flotation gereinigt wird.

16. Verfahren nach einem der voran stehenden Ansprüche,
**dadurch gekennzeichnet,**
**dass** die Papierfasersuspension (S, S') vor der Eindickung (3, 6) eine Konsistenz von 1 bis 10 %, vorzugsweise von 2 bis 6 %, hat.

17. Verfahren nach einem der voran stehenden Ansprüche,
**dadurch gekennzeichnet,**
**dass** die Eindickung (3, 6) in einer Schneckenpresse erfolgt.

18. Verfahren nach Anspruch 1 bis 16,
**dadurch gekennzeichnet,**
**dass** die Eindickung (3, 6) in einer Siebbandpresse erfolgt.

19. Verfahren nach einem der voran stehenden Ansprüche,
**dadurch gekennzeichnet,**
**dass** in der Stoffbearbeitung (4, 7) dispergiert wird.

20. Verfahren nach einem der voran stehenden Ansprüche,
**dadurch gekennzeichnet,**
**dass** in der Stoffbearbeitung (4, 7) gebleicht wird.

21. Verfahren nach einem der voran stehenden Ansprüche,
**dadurch gekennzeichnet,**
**dass** der Weißgrad der Papierfasersuspension unmittelbar nach der Stelle (11, 12, 16) gemessen wird, an der das Filtrat (F3, F6) wieder zugegeben wird.

22. Verfahren nach einem der voran stehenden Ansprüche,
**dadurch gekennzeichnet,**
**dass** das nach der Eindickung (3, 6) vorwärts geführte Filtrat (F3, F6) das Filtrat mit dem höchsten Gehalt an feinen Feststoffen im Vergleich zu den Filtraten der übrigen Eindickungen ist.

23. Verfahren nach einem der voran stehenden Ansprüche,
**dadurch gekennzeichnet,**
**dass** das vorwärts geleitete Filtrat (F3) das Filtrat der ersten Eindickung (3), in Strömungsrichtung gesehen, ist.

24. Verfahren nach einem der Ansprüche 1 bis 22,
**dadurch gekennzeichnet,**
**dass** das vorwärts geleitete Filtrat (F6) das Filtrat der zweiten Eindickung (6), in Strömungsrichtung gesehen, ist.

25. Verfahren nach Anspruch 23 oder 24,
**dadurch gekennzeichnet,**
**dass** das Filtrat (F3) an einer Stelle (12) in den Stoffstrom zurückgeführt wird, der bis auf die in der Papier- oder Kartonmaschine (10) keine weitere Eindickung mehr folgt.

## Claims

1. Method of treating filtrate (F3, F6) produced during at least one thickening (3, 6) stage of a paper fibre suspension (S, S'), in particular a paper fibre suspension (S, S') obtained from waste paper, at least some of the filtrate (F3, F6) being added back to the paper fibre suspension at a point (11, 12, 16) which lies downstream of the thickening stage (3, 6) from which the filtrate (F3, F6) originates, and the thickening stage (3, 6) following a stock processing operation (4, 7) of the stock thickened in the process, **characterized in that**
the filtrate (F3, F6) is added after the following stock processing operation (4, 7), the ash content of the paper fibre suspension is measured before or after the thickening stage (3, 6), and **in that** the measured value is used for the open-loop or closed-loop control of the thickening stage (3, 6), and **in that**, by using this measured value, the ash content of the paper fibre suspension led to the paper or board machine (10) is controlled to a set point by the quantity of filtrate or the feeding back of the filtrate streams being changed with the aid of at least one controller.

2. Method according to Claim 1,
**characterized in that**
the filtrate is added after the following stock processing operation (4, 7), the whiteness of the paper fibre suspension is measured and is controlled to a set point, by the quantity of filtrate or the feeding back of the filtrate streams being changed with the aid of at least one controller.

3. Method according to Claim 1 or 2,
**characterized in that**
the part of the filtrate (F3, F6) that is added again downstream has a content of mineral substances which lies between 0.5 and 20%.

4. Method according to one of the preceding claims, **characterized in that**
the filtrate (F3, F6) is fractionated before being added again, so that a stock concentrate (13, 13') and a clear filtrate (14, 14') are produced, and **in that** the stock concentrate (13, 13') is added again at a point (11, 12, 16) that is placed downstream of the thickening stage (3, 6) from which the filtrate (F3, F6) originates.

5. Method according to Claim 4,
**characterized in that**
the clear filtrate (14, 14') is added again at a point that is placed upstream of the thickening stage (3, 6) from which the filtrate (F3, F6) originates.

6. Method according to Claim 4 or 5,
**characterized in that**
the filtrate fractionation (9, 9') is carried out in hydrocyclones, in which the stock concentrate (13, 13') is taken off at the heavy material outlet.

7. Method according to Claim 4 or 5,
**characterized in that**
the filtrate fractionation (9, 9') is carried out in a disc filter.

8. Method according to Claim 4 or 5,
**characterized in that**
the filtrate fractionation (9, 9') is carried out in a centrifuge.

9. Method according to Claim 4 or 5,
**characterized in that**
the filtrate fractionation (9, 9') is carried out in a dissolved-air flotation stage.

10. Method according to Claim 4 or 5,
**characterized in that**
the filtrate fractionation (9, 9') is carried out in a selective flotation stage.

11. Method according to one of Claims 4 to 10, **characterized in that**
at least one stock concentrate (13, 13') is treated chemically, in particular bleached, before being added again.

12. Method according to Claim 11,
**characterized in that**
the bleaching (4', 7") is carried out in a reducing manner.

13. Method according to one of the preceding claims, **characterized in that**
the paper fibre suspension is subjected to a cleaning stage (2, 5) before the at least one thickening stage (3, 6).

14. Method according to Claim 13,
**characterized in that**
at least one cleaning stage (2, 5) comprises a flotation stage.

15. Method according to Claim 14,
**characterized in that** before being fed into the thickening stage (6), the paper fibre suspension is cleaned twice by flotation.

16. Method according to one of the preceding claims, **characterized in that**
the paper fibre suspension (S, S') has a consistency of 1 to 10%, preferably of 2 to 6%, before the thickening stage (3, 6).

17. Method according to one of the preceding claims, **characterized in that**
the thickening (3, 6) is carried out in a screw press.

18. Method according to Claim 1 to 16, **characterized in that**
the thickening (3, 6) is carried out in a belt press.

19. Method according to one of the preceding claims, **characterized in that**
dispersion is carried out in the stock processing operation (4, 7).

20. Method according to one of the preceding claims, **characterized in that**
bleaching is carried out in the stock processing operation (4, 7).

21. Method according to one of the preceding claims, **characterized in that**
the whiteness of the paper fibre suspension is measured immediately after the point (11, 12, 16) at which the filtrate (F3, F6) is added again.

22. Method according to one of the preceding claims, **characterized in that**
the filtrate (F3, F6) carried forward after the thickening stage (3, 6) is the filtrate with the highest content of fine solids as compared with the filtrates from the other thickening stages.

23. Method according to one of the preceding claims, **characterized in that**
the filtrate (F3) that is led forward is the filtrate from the first thickening stage (3), as seen in the flow direction.

24. Method according to one of Claims 1 to 22, **characterized in that**
the filtrate (F6) that is led forward is the filtrate from the second thickening stage (6), as seen in the flow direction.

25. Method according to Claim 23 or 24, **characterized in that**
the filtrate (F3) is fed back into the stock stream at a point (12) which is followed by no further thickening apart from that in the paper or board machine (10).

## Revendications

1. Procédé de traitement d'un filtrat (F3, F6) produit lors d'au moins un épaississement (3, 6) d'une suspension (S, S') de fibres de papier, en particulier d'une suspension (S, S') de fibres de papier obtenue à partir de vieux papiers, dans lequel au moins une partie du filtrat (F3, F6) est rajoutée à la suspension de fibres de papier en un emplacement (11, 12, 16) situé en aval de l'épaississement (3, 6) duquel le filtrat (F3, F6) provient, un traitement (4, 7) de la matière épaissie suivant l'épaississement (3, 6), **caractérisé en ce que**
l'addition du filtrat (F3, F6) s'effectue après le traitement ultérieur (4, 7) de la matière,
**en ce que** la teneur en cendres de la suspension de fibres de papier est mesurée avant ou après l'épaississement (3, 6),
**en ce que** la valeur de mesure est utilisée pour la commande ou la régulation de l'épaississement (3, 6) et
**en ce qu'**en recourant à cette valeur de mesure, la teneur en cendres de la suspension de fibres de papier amenée à la machine (10) de fabrication de papier ou de carton est régulée à une valeur de consigne en modifiant la quantité de filtrat ou la recirculation des écoulements de filtrat à l'aide d'au moins un régulateur.

2. Procédé selon la revendication 1, **caractérisé en ce que** l'addition du filtrat s'effectue après le traitement ultérieur (4, 7) de la matière et **en ce que** le degré de blancheur de la suspension de fibres de papier est mesuré et est régulé à une valeur de consigne en modifiant la quantité de filtrat ou la recirculation des écoulements de filtrat à l'aide d'au moins un régulateur.

3. Procédé selon les revendications 1 ou 2, **caractérisé en ce que** la partie du filtrat (F3, F6) ajoutée en aval présente une teneur en substances minérales comprise entre 0,5 et 20 %.

4. Procédé selon l'une des revendications précédentes, **caractérisé en ce qu'**avant sa réincorporation, le filtrat (F3, F6) est fractionné de manière à obtenir un concentré de matière (13, 13') et un filtrat clarifié (14, 14') et **en ce que** le concentré de matière (13, 13') est rajouté à un emplacement (11, 12, 16) situé en aval de l'épaississement (3, 6) duquel le filtrat (F3, F6) provient.

5. Procédé selon la revendication 4, **caractérisé en ce que** le filtrat clarifié (14, 14') est rajouté en un emplacement situé en amont de l'épaississement (3, 6) duquel le filtrat (F3, F6) provient.

6. Procédé selon les revendications 4 ou 5, **caractérisé en ce que** le fractionnement (9, 9') du filtrat est réalisé dans des hydro-cyclones dans lesquels le concentré de matière (13, 13') est prélevé à la sortie des matières lourdes.

7. Procédé selon les revendications 4 ou 5, **caractérisé en ce que** le fractionnement du filtrat (9, 9') est réalisé dans un filtre à disques.

8. Procédé selon les revendications 4 ou 5, **caractérisé en ce que** le fractionnement (9, 9') du filtrat est réalisé dans une centrifugeuse.

9. Procédé selon les revendications 4 ou 5, **caractérisé en ce que** le fractionnement (9, 9') du filtrat est réalisé dans une flottation de détente.

10. Procédé selon les revendications 4 ou 5, **caractérisé en ce que** le fractionnement (9, 9') du filtrat est réalisé dans une flottation sélective.

11. Procédé selon l'une des revendications 4 à 10, **caractérisé en ce qu'**au moins un concentré (13, 13') de matière est traité chimiquement et en particulier blanchi avant sa réincorporation.

12. Procédé selon la revendication 11, **caractérisé en ce que** le blanchiment (4', 7") est réalisé en conditions réductrices.

13. Procédé selon l'une des revendications précédentes, **caractérisé en ce que** la suspension des fibres de papier subit une épuration (2, 5) avant le ou les épaississements (3, 6).

14. Procédé selon la revendication 13, **caractérisé en ce qu'**au moins une épuration (2, 5) comporte une flottation.

15. Procédé selon la revendication 14, **caractérisé en ce que** la suspension de fibres de papier est purifiée deux fois par flottation avant d'être amenée dans l'épaississement (6).

16. Procédé selon l'une des revendications précédentes, **caractérisé en ce que** la suspension (S, S') de fibres de papier présente avant l'épaississement (3, 6) une consistance de 1 à 10 % et de préférence de 2 à 6 %.

17. Procédé selon l'une des revendications précédentes, **caractérisé en ce que** l'épaississement (3, 6) a lieu dans une presse à vis.

18. Procédé selon l'une des revendications 1 à 16, **caractérisé en ce que** l'épaississement (3, 6) a lieu dans une presse à tamiseuse.

19. Procédé selon l'une des revendications précédentes, **caractérisé en ce qu'**une dispersion a lieu dans le traitement (4, 7) des matières.

20. Procédé selon l'une des revendications précédentes, **caractérisé en ce qu'**un blanchiment à lieu dans le traitement (4, 7) des matières.

21. Procédé selon l'une des revendications précédentes, **caractérisé en ce que** le degré de blancheur de la suspension de fibres de papier est mesuré immédiatement après l'emplacement (11, 12, 16) auquel le filtrat (F3, F6) est rajouté.

22. Procédé selon l'une des revendications précédentes, **caractérisé en ce que** le filtrat (F3, F6) amené en avant après l'épaississement (3, 6) est le filtrat qui présente la plus haute teneur en solides fins parmi tous les filtrats des autres épaississements.

23. Procédé selon l'une des revendications précédentes, **caractérisé en ce que** le filtrat (F3) amené vers l'avant est le filtrat du premier épaississement (3) dans la direction d'écoulement.

24. Procédé selon l'une des revendications 1 à 22, **caractérisé en ce que** le filtrat (F6) amené vers l'avant est le filtrat du deuxième épaississement (6) dans la direction d'écoulement.

25. Procédé selon les revendications 23 ou 24, **caractérisé en ce que** le filtrat (F3) est renvoyé dans l'écoulement de matière à un emplacement (12) qui n'est suivi par aucun autre épaississement jusqu'à arriver dans la machine (10) de fabrication de papier ou de carton.
